# EUROPEAN PATENT APPLICATION

(11) **EP 2 928 161 A1**
(43) Date of publication of application: **07.10.2015**
(21) Application number: 15165063.7
(22) Date of filing: 03.06.2011
(51) Int. Cl.: H04L 29/12

(54) **METHOD AND APPARATUS FOR MESSAGE TRANSMISSION**

(30) Priority: 25.11.2010 CN 201010591093
(62) Divisional of application: 11786125.2
(71) Applicant: Huawei Technologies Co., Ltd., Longgang District Shenzhen, Guangdong 518129 (CN)
(72) Inventor: Lu, Xushan, SHENZHEN, Guangdong Province 518129 (CN); Zhou, Qian, SHENZHEN, Guangdong Province 518129 (CN); Peng, Jun, SHENZHEN, Guangdong Province 518129 (CN); Zou, Ting, SHENZHEN, Guangdong Province 518129 (CN)
(74) Representative: Epping - Hermann - Fischer

(57) **Abstract**

A method for message transmission comprises: receiving a forward message sent from an internal network device to an external network; transmitting the forward message after replacing the source address of the forward message with a public network IP address; receiving a reverse message sent from the external network to the internal network device; and transmitting the reverse message after replacing the destination public network IP address of the reverse message, which is sent from the external network to the internal network device, with a private network IP address of the internal network device. With the method, the NAT device can support more users, and thus the number of NAT devices is reduced and synchronization can be achieved between the internal network device and the NAT device when the NAT device aging occurs.

## Description

### FIELD OF TECHNOLOGY

The present invention relates to the field of network communication technology, and particularly to a method and an apparatus for message transmission.

### BACKGROUND

With the evolution of IPv6 and the exhausting of IPv4 addresses, and since the evolution of IPv6 of the whole industry chain is relatively hysteretic, IPv4 and IPv6 will coexist for a long time. Currently, the widely used solution is to make scale arrangement of the NAT (Network Address Translation) devices, and generally one NAT device supports tens of thousands or even more users. In a case where a user equipment needs to transmit a message to an external network, a plurality of links need to be established on the corresponding NAT device, and each link requires establishing an NAT entry on the corresponding NAT device. Thus, there is a problem that the NAT devices have heavier burdens and support less users.

### SUMMARY

The embodiments of the present invention provide a method and an apparatus for message transmission, which can reduce the burden of the NAT device and enable the NAT device to support more users.

A method for message transmission comprises:
receiving a forward message sent from an internal network device to an external network; and
transmitting the forward message after replacing a source address of the forward message with a public network IP address according to a private network IP address, a range of external ports and the public network IP address of the internal network device, which are contained in network address translation NAT entries;
or,
receiving a reverse message sent from the external network to the internal network device; and
transmitting the reverse message after replacing a destination public network IP address of the reverse message, which is sent from the external network to the internal network device, with the private network IP address of the internal network device according to the private network IP address, the range of external ports and the public network IP address of the internal network device, which are contained in the network address translation NAT entries.

An apparatus for message transmission comprises:
a message receiving unit, configured to receive a forward message sent from an internal network device to an external network, or a reverse message sent from the external network to the internal network device;
an external network forward message transmitting unit, configured to replace a source address of the forward message sent from the internal network device to the external network with a public network IP address according to a private network IP address, a range of external ports and the public network IP address of the internal network device, which are contained in network address translation NAT entries, and transmit the forward message; and
an external network reverse message transmitting unit, configured to replace a destination public network IP address of the reverse message sent from the external network to the internal network device with the private network IP address of the internal network device according to the private network IP address, the range of external ports and the public network IP address of the internal network device, which are contained in the network address translation NAT entries, and then transmit the reverse message.

A method for message transmission comprises:
receiving a forward message sent from a user equipment to an external network; and
transmitting the forward message after replacing a source port number of the forward message with a range of external ports, and replacing a source address thereof with a private network IP address of an internal network device.

An apparatus for message transmission comprises:
a message receiving unit, configured to receive a forward message sent from a user equipment to an external network; and
an internal network forward message transmitting unit, configured to replace a source port number of the forward message with a range of external ports, and replace a source address thereof with a private network IP address of an internal network device, and transmit the forward message.

As can be seen from the technical solutions provided by the embodiments of the present invention, in the NAT device, the source address of the forward message is replaced by the public network IP address, and the destination public network IP address of the reverse message is replaced by the private network IP address of the internal network device, according to the private network IP address, the range of external ports and the public network IP address of the internal network device, which are contained in the network address translation NAT entries. That is, during an access to the external network by the user, the NAT device establishes an entry only every time the internal network device gets online, and no entry needs to be established when a message is subsequently sent to establish links, thus reducing the number of entries established in the NAT device. Accordingly, the NAT device can support more users, and thus the number of NAT devices is reduced and synchronization can be achieved between the internal network device and the NAT device when the NAT device aging occurs.

### BRIEF DESCRIPTION OF THE DRAWINGS

In order to more clearly describe the technical solutions of the embodiments of the present invention, the drawings to be used in the descriptions of the embodiments are briefly introduced as follows. Obviously, the following drawings just illustrate some embodiments of the present invention, and a person skilled in the art can obtain other drawings from these drawings without paying any creative effort.
FIG. 1 is a flow diagram of a method for message transmission at an NAT device end according to an embodiment of the present invention;
FIG. 2 is a flow diagram of a method for message transmission at an internal network device end according to an embodiment of the present invention;
FIG. 3 is a signaling flow diagram in which a user equipment performs message transmission with an external network through an internal network device and an NAT device according to an embodiment of the present invention;
FIG. 4 is a flow diagram of a method for an internal network device to apply for an external port range and to perform a message transmission with an external network according to an embodiment of the present invention;
FIG. 5 is a structural schematic diagram of an apparatus for message transmission according to an embodiment of the present invention.

### DETAILED DESCRIPTION

The technical solutions of the embodiments of the present invention will be clearly and completely described as follows with reference to the drawings. Apparently, the described embodiments are just a part of embodiments of the present invention rather than all the embodiments. Based on the embodiments of the present invention, any other embodiment obtained by a person skilled in the art without paying any creative effort will fall within the protection scope of the present invention.

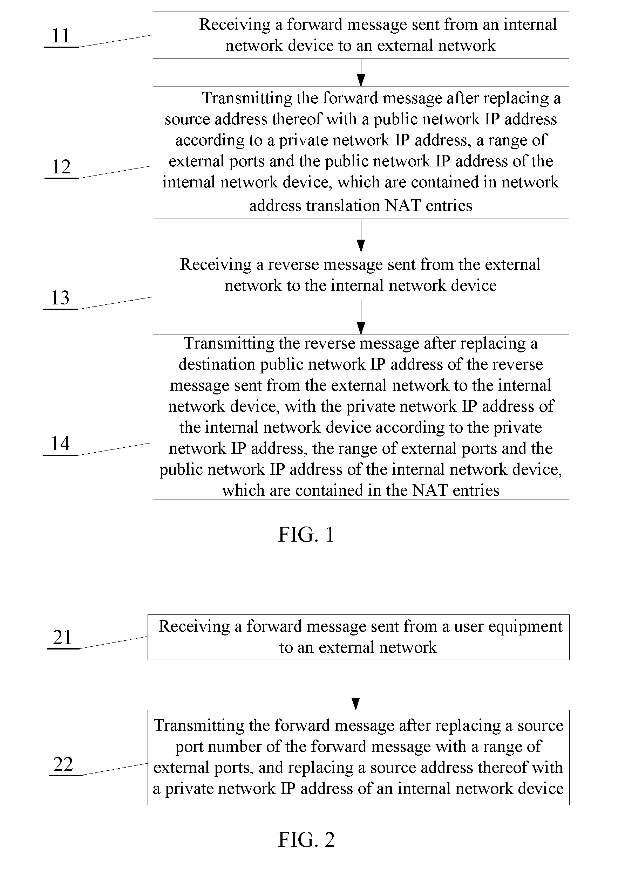

The embodiment of the present invention provides a method for message transmission. As illustrated in FIG. 1, the method specifically may include:
Step 11: receiving a forward message sent from an internal network device to an external network.

Specifically, when sending a forward message to an external network, a user equipment firstly transmits the forward message to an NAT device through an internal network device, and the NAT device receives the forward message.

Step 12: transmitting the forward message after replacing the source address of the forward message with the public network IP address according to the private network IP address, the range of external ports and the public network IP address of the internal network device, which are contained in NAT entries.

Specifically, the NAT device establishes the NAT entries for the internal network device when the internal network device gets online, wherein the NAT entry contain the private network IP address of the internal network device, and the range of external ports and the public network IP address assigned to the internal network device; and after receiving the forward message sent from the internal network device to the external network, the NAT device replaces the source address of the forward message with the public network IP address, and transmits the forward message to the external network.

Or,

Step 13: receiving a reverse message sent from the external network to the internal network device.

Specifically, when sending the reverse message to the internal network device, the external network firstly transmits the reverse message to an NAT device, and the NAT device receives the reverse message.

Step 14: transmitting the reverse message after replacing a destination public network IP address of the reverse message sent from the external network to the internal network device, with the private network IP address of the internal network device according to the private network IP address, the range of external ports and the public network IP address of the internal network device, which are contained in the NAT entries.

Specifically, the NAT device establishes NAT entries for the internal network device when the internal network device gets online, wherein the NAT entry contain the private network IP address of the internal network device, and the range of external ports and the public network IP address assigned to the internal network device; after receiving the reverse message sent from the external network to the internal network device, the NAT device replaces the destination public network IP address of the reverse message with the private network IP address of the internal network device, and transmits the reverse message to the internal network device.

The embodiment of the present invention further provides a method for message transmission. As illustrated in FIG. 2, the method specifically includes:
Step 21: receiving a forward message sent from a user equipment to an external network.
Specifically, when sending the forward message to the external network, the user equipment firstly transmits the forward message to an internal network device connected thereto, and the internal network device receives the forward message.
Step 22: transmitting the forward message after replacing a source port number of the forward message with a range of external ports, and replacing a source address thereof with a private network IP address of the internal network device.

Specifically, after receiving the forward message sent from the user equipment to the external network, the internal network device replaces the source port number of the forward message with the range of external ports assigned by the NAT device, and replaces the source address with the private network IP address of the internal network device, and transmits the forward message to the NAT device.

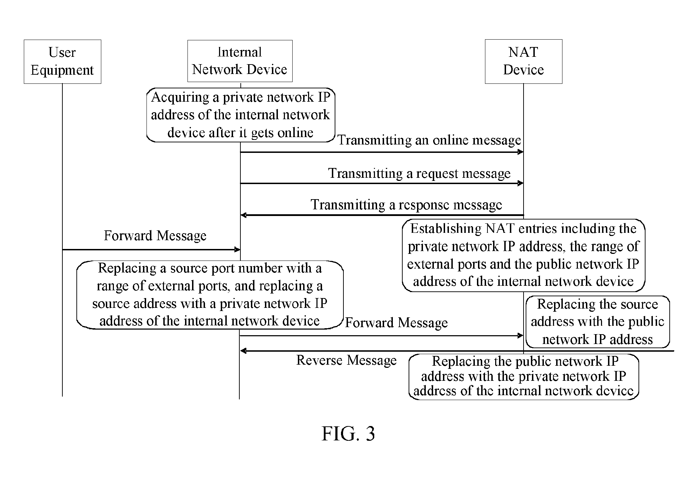

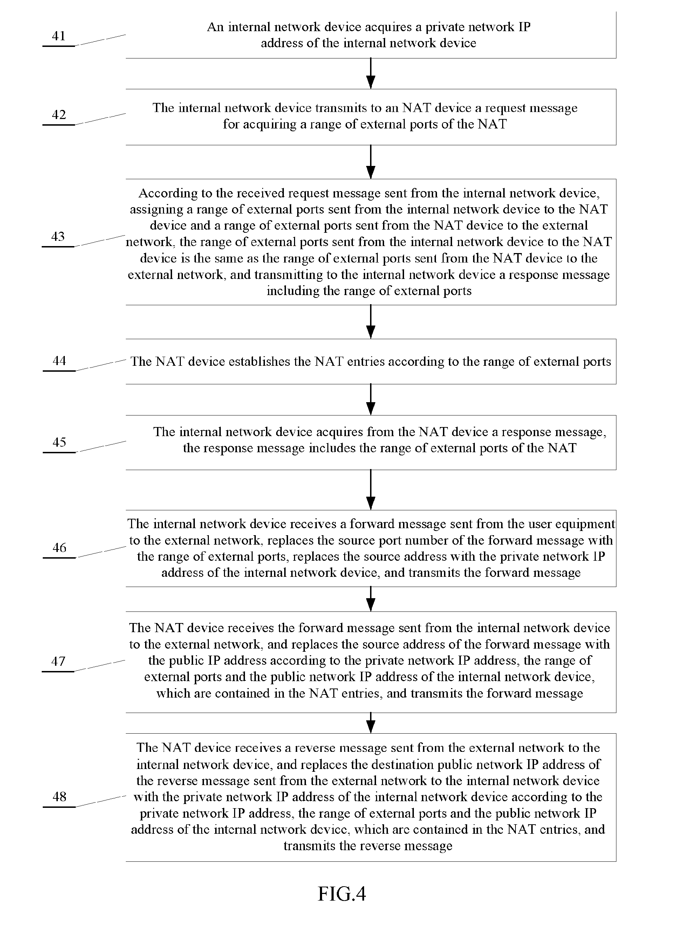

The embodiment is further described as follows through a process in which the user equipment performs a message transmission with the external network via the internal network device and the NAT device. Referring to FIG. 3 for the detailed signaling flow, the devices involved therein include a user equipment, an internal network device and an NAT device, wherein the internal network device may be a CPE (Customer Premises Equipment), and the NAT device may be a CGN (Carrier-Grade NAT). When the CPE is of a bridge type, the user equipment needs to support the function of the CPE, i.e., the internal network device is the user equipment itself in that case. When a tunnel scene is employed between the CPE and the CGN, the CGN needs to encapsulate and decapsulate the tunnel. As illustrated in FIG. 4, the detailed process may include:
Step 41: an internal network device acquires a private network IP address of the internal network device.

Specifically, when the internal network device (e.g., CPE) gets online, the internal network device's private network IP address may be acquired through a DHCP (Dynamic Host Configuration Protocol) or by means of PPPoE. After the private network IP address is acquired, an online notification is sent to the NAT device (e.g., CGN).

Step 42: the internal network device transmits to the NAT device a request message for acquiring a range of external ports of the NAT.

Specifically, after acquiring the private network IP address of the internal network device, the internal network device transmits to the NAT device a request message. The request message carries the private network IP address of the internal network device, so that the NAT device may acquire the private network IP address of the internal network device. The request message may be based on PCP (Pinhole Control Protocol), and may specifically be a pinhole request message, or a DHCP-based request message, and may specifically be a DHCP discover message. The request message is used by the internal network device to negotiate with the NAT device for a range of external ports, the range of external ports serve as the range of external ports for transmission from the internal network device to the NAT device and the range of external ports for transmission from the NAT device to the external network, the range of external ports for transmission from the internal network device to the NAT device is same as the range of external ports for transmission from the NAT device to the external network.

Further, the carrier-grade NAT device (CGN) generally has an NAT public network address pool, and the public network address of the user equipment after NAT process is randomly selected from the pool, thus it cannot be ensured that the public network address of a single user equipment after NAT process maintains the same IP address. In the current network, there are many applications that require establishing a plurality of links, after NAT process, the public network address of the plurality of links need to be a same IP address, the links cannot be established if the public network addresses of these links after NAT process are not the same one. Thus, the internal network device may further negotiate the public network IP address of the message sent from the user equipment connected to the internal network device and after NAT process, so that the user equipment may employ the same IP address during the subsequent link, thereby avoiding the situation that a link cannot be established.

Step 43: according to the received request message sent by the internal network device, assigning a range of external ports sent from the internal network device to the NAT device and a range of external ports sent from the NAT device to the external network, the range of external ports sent from the internal network device to the NAT device is same as the range of external ports sent from the NAT device to the external network, and transmitting to the internal network device a response message including the range of external ports.

Specifically, after receiving the request message sent by the internal network device, the NAT device may assign, based on the condition of the user equipment, the range of external ports sent from the internal network device to the NAT device and the range of external ports sent from the NAT device to the external network (discontinuous range of external ports may be assigned, such as 2000-3000 and 4000- 5000; when the internal network device accesses an external network address, generally 100∼300 links are established, and each link will establish an entry in the NAT device; but by assigning the range of external ports sent from the internal network device to the NAT device and the range of external ports sent from the NAT device to the external network, which are the same as each other, during the access to the external network by the internal network device, the NAT device establishes an entry every time the internal network device gets online; no entry needs to be established when a message is subsequently sent to establish links, and an external port is selected from the range of external ports for a transmission, and thus the number of entries established in the NAT device is reduced, and the internal network device and the NAT device can be synchronized with each other when the NAT device ages), and transmits the assigned range of external ports to the internal network device in form of a response message, which specifically may be a Pinhole Response message or a DHCP offer message. In that case, if the range of external ports assignable by the NAT device has exhausted, an error response message may be returned to the internal network device. In addition, if the number of users increases subsequently and the applied range of external ports is insufficient, a dynamic negotiation may be made to extend the range of external ports.

The NAT device can also assign a public network IP address corresponding to the internal network device, and carry the public network IP address in a response message under certain condition to transmit the response message carried with the public network IP address carried therein to the internal network device. The certain condition may be that the internal network device further requests in the request message to negotiate the public network IP address. The notification of the translated public network IP address to the internal network device enables the user equipment connected to the internal network device to use the same IP address in the subsequent link, thereby avoiding the situation that a link cannot be established. In addition, the above notification also can effectively utilize the advantage of a relatively stronger ALG (Application Level Gateway) function currently had by the internal network device, so that the NAT device does not need a corresponding ALG.

Step 44: the NAT device establishes the NAT entries according to the range of external ports.

Specifically, after the NAT device assigns to the internal network device the range of external ports sent from the internal network device to the NAT device, the range of external ports sent from the NAT device to the external network, and the corresponding public network IP address, the NAT device establishes therein corresponding NAT entries. The NAT entries includes the private network IP address of the internal network device, the range of external ports sent from the internal network device to the NAT device, the public network IP address and the range of external ports sent from the NAT device to the external network. Wherein the range of external ports sent from the internal network device to the NAT device is the same as the range of external ports sent from the NAT device to the external network.

Step 45: the internal network device acquires from the NAT device a response message that contains the range of external ports of the NAT.

Specifically, after the internal network device receives the response message sent from the NAT device, the internal network device stores the corresponding range of external ports. When the public network IP address is applied for in step 42, the public network IP address is also stored.

Step 46: the internal network device receives a forward message sent from the user equipment to the external network, replaces the source port number of the forward message with the range of external ports, replaces the source address with the private network IP address of the internal network device, and transmits the forward message.

Specifically, when the user equipment needs to send a forward message to the external network, the user equipment firstly transmits the forward message to the internal network device, wherein the forward message contains a source address, a destination address, a source port number and a destination port number. After the internal network device receives the forward message sent from the user equipment to the external network, the internal network device replaces the source port number with the range of external ports, replaces the source address with the private network IP address of the internal network device, and transmits the forward message to the NAT device from a certain port in the range of external ports.

Step 47: the NAT device receives the forward message sent from the internal network device to the external network, and according to the private network IP address, the range of external ports and the public network IP address of the internal network device, which are contained in the network address translation NAT entries, replaces the source address of the forward message with the public network IP address, and transmits the forward message.

Specifically, after the NAT device receives the forward message sent from the internal network device to the external network, the NAT device searches the stored NAT entries for an entry matched with the private network IP address and the range of external ports of the internal network device of the forward message, replaces the source address with the public network IP address of the matched entry, and transmits the forward message to the external network from a certain port in the range of external ports.

Step 48: the NAT device receives a reverse message sent from the external network to the internal network device, and according to the private network IP address, the range of external ports and the public network IP address of the internal network device, which are contained in the network address translation NAT entries, replaces the destination public network IP address of the reverse message sent from the external network to the internal network device with the private network IP address of the internal network device, and transmits the reverse message.

Specifically, when the external network sends a reverse message to the internal network device through the NAT device, the NAT device receives the reverse message sent from the external network to the internal network device, wherein the reverse message contains a source address, a destination address, a source port number and a destination port number, and the destination address is a public network IP address. The NAT device searches the stored NAT entries for an entry matched with the destination public network IP address and the range of external ports having the destination port number within the range, replaces the destination public network IP address with the private network IP address of the internal network device of the matched entry, and transmits the reverse message to the internal network device.

According to this embodiment, in the NAT device, the source address of the forward message is replaced with the public network IP address, and the destination public network IP address of the reverse message is replaced with the private network IP address of the internal network device, according to the private network IP address, the range of external ports and the public network IP address of the internal network device, which are contained in the network address translation NAT entries. That is, during an access to the external network by the user, the NAT device establishes an entry only every time the internal network device gets online, and no entry needs to be established when a message is subsequently sent to establish links. Thus the number of entries established in the NAT device is reduced, the NAT device can support more users and thus the number of the NAT devices is reduced, and the internal network device and the NAT device can be synchronized with each other when the NAT device ages.

A person skilled in the art is appreciable that all or a part of flows in the methods according to the above embodiments may be implemented by instructing relevant hardware through a computer program that may be stored in a computer readable storage medium, and when being executed, the program includes the flows of the above method embodiments. In which, the storage medium may be magnetic disk, optical disk, Read-Only Memory (ROM) or Random Access Memory (RAM), etc.

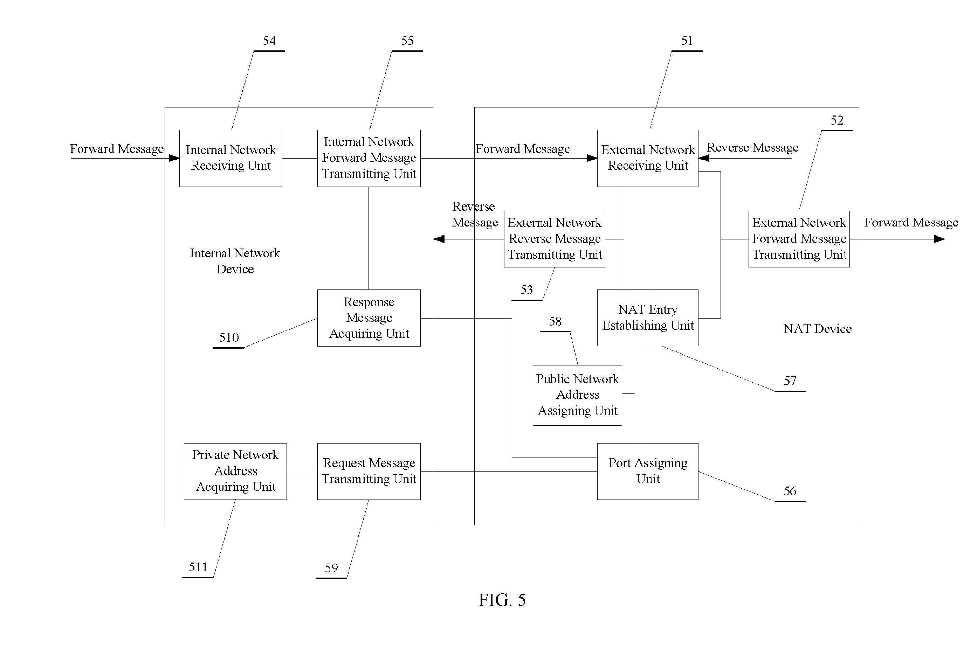

The embodiment of the present invention also provides an apparatus for message transmission. As illustrated in FIG. 5, at the NAT device end, the apparatus includes an external network receiving unit 51, an external network forward message transmitting unit 52 and an external network reverse message transmitting unit 53. The external network receiving unit 51 is configured to receive a forward message sent from an internal network device to an external network, or a reverse message sent from the external network to the internal network device. The external network forward message transmitting unit 52 is configured to replace the source address of the forward message sent from the internal network device to the external network with the public network IP address according to the private network IP address, the range of external ports and the public network IP address of the internal network device, which are contained in the NAT entries, and transmit the forward message. The external network reverse message transmitting unit 53 is configured to replace the destination public network IP address of the reverse message sent from the external network to the internal network device with the private network IP address of the internal network device according to the private network IP address, the range of external ports and the public network IP address of the internal network device, which are contained in the NAT entries, and transmit the reverse message. At the internal network device end, the apparatus may include an internal network receiving unit 54 and an internal network forward message transmitting unit 55. The internal network receiving unit 54 is configured to receive a forward message sent from a user equipment to the external network. The internal network forward message transmitting unit 55 is configured to replace the source port number of the forward message with the range of external ports, and replace the source address with the private network IP address of the internal network device, and transmit the forward message.

Further, at the NAT device end, the apparatus may further include a port assigning unit 56, an NAT entry establishing unit 57 and a public network address assigning unit 58. The port assigning unit 56 is configured to assign a range of external ports sent from the internal network device to the NAT device and a range of external ports sent from the NAT device to the external network, the range of external ports sent from the internal network device to the NAT device is same as the range of external ports sent from the NAT device to the external network, according to a received request message sent by the internal network device, and transmit a response message including the range of external ports to the internal network device. The NAT entry establishing unit 57 is configured to establish the NAT entries according to the range of external ports. The public network address assigning unit 58 is configured to assign the public network IP address of the forward message sent to the external network after being translated by the NAT device, and carry the public network IP address in the response message under a certain condition to transmit them together to the internal network device; the certain condition may be that the internal network device further requests to negotiate the public network IP address in the request message. At the internal network device end, the apparatus may further include a request message transmitting unit 59, a response message acquiring unit 510 and a private network address acquiring unit 511. The request message transmitting unit 59 is configured to transmit a request message for acquiring the range of external ports of the NAT before receiving the forward message sent from the user equipment to the external network. The response message acquiring unit 510 is configured to acquire a response message, the response message includes the range of external ports after NAT process. The private network address acquiring unit 511 is configured to acquire the private network IP address of the internal network device, and carry the private network IP address of the internal network device in the request message.

Further, in the NAT device, the corresponding NAT entry establishing unit is specifically configured to establish entries including the private network IP address, the range of external ports and the public network IP address of the internal network device. In the internal network device, the corresponding request message is also used for acquiring the public network IP address translated by the NAT device.

According to this embodiment, in the NAT device, the source address of the forward message is replaced with the public network IP address, and the destination public network IP address of the reverse message is replaced with the private network IP address of the internal network device, according to the private network IP address, the range of external ports and the public network IP address of the internal network device, which are contained in the NAT entries. That is, during an access to the external network by the user, the NAT device establishes an entry every time the internal network device gets online, and no entry needs to be established when a message is subsequently sent to establish links. Thus, the number of entries established in the NAT device is reduced, the NAT device can support more users and thus the number of the NAT devices is reduced, and the internal network device and the NAT device can be synchronized with each other when the NAT device ages. Please refer to the descriptions of the method embodiments for the implementations of the processing functions of respective units included in the above apparatus, and herein are omitted.

The above descriptions are just preferred embodiments of the present invention, and the protection scope of the present invention is not limited thereto. Any change or replacement easily conceivable to a person skilled in the art within the technical scope disclosed by the present invention should be covered by the protection scope of the present invention. Therefore, the protection scope of the present invention should be determined by the protection scopes of the claims.

## Claims

1. A method for message transmission, **characterized in** comprising:
receiving (11) a forward message sent from an internal network device to an external network; and
transmitting (12) the forward message after replacing a source address of the forward message with a public network IP address according to a private network IP address, a range of external ports and the public network IP address of the internal network device, which are contained in network address translation NAT entries;
or,
receiving (13) a reverse message sent from the external network to the internal network device; and
transmitting (14) the reverse message after replacing a destination public network IP address of the reverse message sent from the external network to the internal network device, with the private network IP address of the internal network device according to the private network IP address, the range of external ports and the public network IP address of the internal network device, which are contained in the network address translation, NAT, entries.

2. The method according to claim 1, **characterized in that** before receiving (11) the forward message sent from the internal network device to the external network or receiving the reverse message sent from the external network to the internal network device, the method further comprises:
according to a received request message sent from the internal network device, assigning (43) a range of external ports sent from the internal network device to the NAT device and a range of external ports sent from the NAT device to the external network, the range of external ports sent from the internal network device to the NAT device is the same as the range of external ports sent from the NAT device to the external network, and transmitting to the internal network device a response message including the range of external ports; and
establishing (44) the NAT entries according to the range of external ports.

3. The method according to claim 2, **characterized in that** the method further comprises assigning the public network IP address of the forward message sent to the external network after being translated by the NAT device, carrying the public network IP address in the response message and transmitting the response message with the public network IP address carried therein to the internal network device.

4. The method according to claim 3, **characterized in that** the request message carries the private network IP address of the internal network device, and the NAT entry contains the private network IP address, the public network IP address and the range of external ports of the internal network device.

5. The method according to claim 2, **characterized in that** the request message comprises a Pinhole Control Protocol, PCP, message or a Dynamic Host Configuration Protocol, DHCP, message.

6. An apparatus for message transmission, **characterized in** comprising:
an external network receiving unit (51), configured to receive a forward message sent from an internal network device to an external network, or a reverse message sent from the external network to the internal network device;
an external network forward message transmitting unit (52), configured to replace a source address of the forward message sent from the internal network device to the external network with a public network IP address according to a private network IP address, a range of external ports and the public network IP address of the internal network device, which are contained in network address translation NAT entries, and transmit the forward message; and
an external network reverse message transmitting unit (53), configured to replace a destination public network IP address of the reverse message sent from the external network to the internal network device with the private network IP address of the internal network device according to the private network IP address, the range of external ports and the public network IP address of the internal network device, which are contained in the network address translation, NAT, entries, and transmit the reverse message.

7. The apparatus according to claim 6, **characterized in that** the apparatus further comprises:
a port assigning unit (56), configured to assign a range of external ports sent from the internal network device to the NAT device and a range of external ports sent from the NAT device to the external network, the range of external ports sent from the internal network device to the NAT device is the same as the range of external ports sent from the NAT device to the external network, according to a received request message sent from the internal network device, and transmit a response message including the range of external ports to the internal network device; and
an NAT entry establishing unit (57), configured to establish the NAT entries according to the range of external ports.

8. The apparatus according to claim 7, **characterized in that** the apparatus further comprises:
a public network address assigning unit (58), configured to assign the public network IP address of the forward message sent to the external network after being translated by the NAT device, and carry the public network IP address in the response message under a certain condition and transmit the response message with the public network IP address carried therein to the internal network device.

9. The apparatus according to claim 8, **characterized in that** the NAT entry establishing unit (57) is specifically configured to establish the entries including the private network IP address, the range of external ports and the public network IP address of the internal network device.

10. A method for message transmission, **characterized in** comprising:
receiving (21) a forward message sent from a user equipment to an external network; and
transmitting (22) the forward message after replacing a source port number of the forward message with a range of external ports, and replacing a source address thereof with a private network IP address of an internal network device.

11. The method according to claim 10, **characterized in that** before receiving (21) the forward message sent from the user equipment to the external network, the method further comprises:
transmitting a request message for acquiring the range of external ports of a network address translation NAT; and
acquiring a response message including the range of external ports after NAT process.

12. The method according to claim 11, **characterized in that** before transmitting the request message for acquiring the range of external ports of the network address translation NAT, the method further comprises:
acquiring the private network IP address of the internal network device, and carrying the private network IP address of the internal network device in the request message.

13. The method according to claim 11 or 12, **characterized in that** the request message is further used for acquiring a public network IP address translated by an NAT device.

14. The method according to claim 11, **characterized in that** the request message comprises a pinhole control protocol, PCP, message or a dynamic host configuration protocol, DHCP, message.

15. An apparatus for message transmission, **characterized in** comprising:
an internal network receiving unit (54), configured to receive a forward message sent from a user equipment to an external network; and
an internal network forward message transmitting unit (55), configured to replace a source port number of the forward message with a range of external ports, and replace a source address with a private network IP address of an internal network device, and transmit the forward message.

16. The apparatus according to claim 15, **characterized in that** the apparatus further comprises:
a request message transmitting unit (59), configured to transmit a request message for acquiring the range of external ports of a network address translation NAT before receiving the forward message sent from the user equipment to the external network; and
a response message acquiring unit (510), configured to acquire a response message, the response message includes the range of external ports after NAT process.

17. The apparatus according to claim 16, **characterized in that** the apparatus further comprises:
a private network address acquiring unit (511), configured to acquire the private network IP address of the internal network device, and carry the private network IP address of the internal network device in the request message.

18. The apparatus according to claim 16 or 17, **characterized in that** the request message is further used for acquiring a public network IP address translated by the NAT device.
